# EUROPEAN PATENT APPLICATION

(11) **EP 2 233 843 A1**
(43) Date of publication of application: **29.09.2010**
(21) Application number: 09155920.3
(22) Date of filing: 23.03.2009
(51) Int. Cl.: F24D 1/00, H01M 8/00, C25B 1/04

(54) **Installation for generating heat and/or electricity in buildings**

(71) Applicant: OPAi-NL B.V., 1019 LB Amsterdam (NL)
(72) Inventor: Rau, Thomas Martin, 1251 AK, Laren (NL)
(74) Representative: Metman, Karel Johannes

(57) **Abstract**

The invention relates to an installation for generating heat and/or electricity in buildings. It comprises a water supply (3), an electricity supply (2), an oxy-hydrogen generator (1) connected to the water and electricity supply to produce oxy-hydrogen from the water, in particular by means of electrolysis. At least one convertor (4 - 7), such as a combined electricity/heat producing apparatus (4), converts the energy of the oxy-hydrogen into heat and/or electricity for use in the buildings.

## Description

The invention relates to an installation for generating heat and/or electricity in buildings.

In the present days reducing carbon oxide output and saving energy is a great challenge. One area of research is architecture where architects strive to design buildings that are energy neutral thereby obtaining both objectives.

One of the objects of the present invention is to further improve the energy balance in buildings.

The invention obtains this objective by providing an installation comprising: a water supply, an electricity supply, an oxy-hydrogen generator connected to the water and electricity supply to produce oxy-hydrogen from the water, in particular by means of electrolysis, and at least one convertor to convert the energy of the oxy-hydrogen into particular heat and/or electricity for use in the building or buildings.

Investigations have shown that oxy-hydrogen (a mixture of oxygen and hydrogen gases derived from water, or Brown's gas which is oxy-hydrogen derived from common ducted electrolysis) is a reliable energy carrier with a very high energy output and it has now been found that this oxy-hydrogen may serve as fuel in a convertor which converts the energy in the oxy-hydrogen into electricity and heat to be used in the building.

The convertor may include a combined electricity/heat production apparatus that has become popular already in some countries, due to its very high efficiency, but using natural gas as fuel, thereby still producing carbon dioxide. By using the oxy-hydrogen as fuel, the production of carbon dioxide is reduced or even made zero when carbon dioxide neutral electricity (e.g. from wind or solar energy) is used. The convertor only emits water vapour when the oxy-hydrogen is burned so that the convertor is carbon dioxide neutral as well.

A part of the electricity produced by the convertor may be returned again to the electricity supply of the oxy-hydrogen generator, thereby reducing the need for external electricity sources, such as wind or solar energy sources. The heat produced by the convertor may be used directly for heating the building, in particular by heating a fluid, or may be accumulated in the form of heated water in an accumulator to be used later for warm water producing equipment or for heating the building.

The convertor may also include at least one of an absorption machine to produce low temperature fluid to cool the building, a heating unit to produce high temperature fluid to heat the building and a motor/generator to produce electricity for use in the building, instead of or in addition to a combined electricity/heat production apparatus.

If there is a surplus of electricity produced by the convertor, it may be delivered to the electrical power network.

The water supply may be connected to a rain water collector thereby avoiding the use of drinking water.

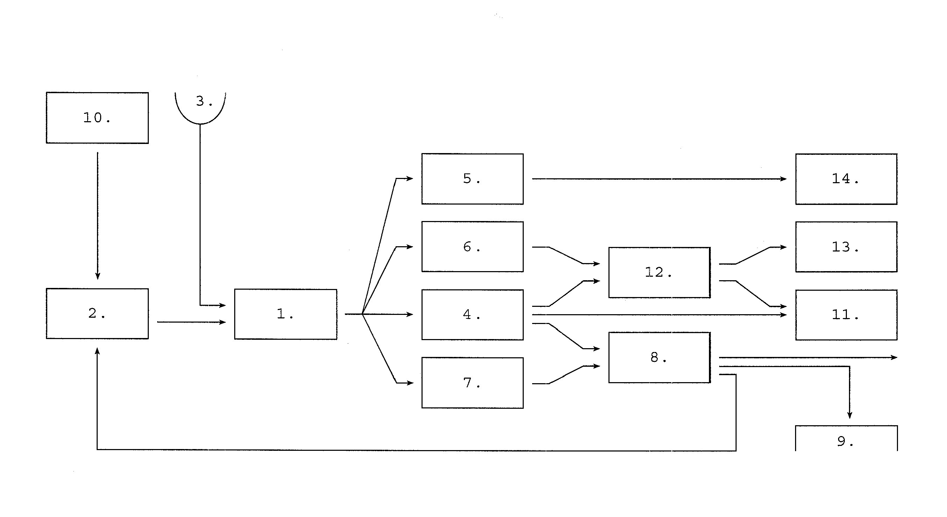

Further details and advantages of the invention follow from the description of the only figure of the drawing showing a scheme of an embodiment of the installation according to the invention.

The drawing shows an installation for generating heat and/or electricity in a building, which may be a dwelling building, such as a house, a utility building or any other type of building. It is also conceivable to use the installation for several buildings or a group of buildings. The installation comprises a oxy-hydrogen generator 1 which produces a stoichiometric mixture of hydrogen and oxygen gases. One way of producing this mixture from water is by means of electrolysis. The generator comprises an electrolysis chamber including electrodes, an electrolyte and water. Electricity from an electricity source 2 and water from a water source 3 are supplied to the oxy-hydrogen generator and oxy-hydrogen is then produced. A known oxy-hydrogen generator 1 that can be used is a Oxy-Hydrogen Generator from the company Epoch Energy Technology, Corp. in Taiwan, for example two EP-350 models. Other oxy-hydrogen generators are conceivable of course.

The mixture of hydrogen and oxygen is supplied as fuel to a convertor in order to convert the energy in the oxy-hydrogen into heat and/or electricity. This convertor may include one or more of the following convertors: a combined electricity/heat production apparatus 4, an absorption machine 5, a heating unit 6 and an engine/generator 7.

The combined electricity/heat production apparatus 4 are known in the art. One example on the market is the CHP XRGI 15G Gas Energy Solution from SAV United Kingdom Ltd. The engine is suitable for running on natural gas, LPG, butane, propane and Bio Gas, and the inventor has found that this engine can also run on oxy-hydrogen. It can have a very high efficiency and produces electricity through a generator and heat in the form of hot water. Other apparatus 4 are conceivable, for example containing a Stirling motor instead of an internal combustion engine.

The electricity 8 produced by the apparatus 4 is used in the building, accumulated, delivered to the electrical power network 9, and/or returned to the electrical energy source 2 of the oxy-hydrogen generator 1. If the surplus electrical energy is returned to the oxy-hydrogen generator, the need for external energy sources, for example from wind power generators, solar cells 10 or the like (preferably mounted near or on the building) is considerably reduced, thereby reducing the cost of the installation.

The heat produced by the apparatus 4 is used to heat water or other fluids to directly or indirectly heat the building by a heating device 11. When indirect heating is used, the heated fluid is accumulated in a buffer vessel 12 and is stored there until it is needed. The buffer vessel 12 may also contain hot tap water for use in hot water devices 13 in the building, such as hot water taps, a shower etc. Such buffer vessel is well known in the art.

Hot water for heating purposes or tap water can also be produced by the heating unit 6 which burns the oxy-hydrogen. If cold water is needed to cool the building in hot climates the oxy-hydrogen be supplied to the absorption machine 5 that produces cooled fluid, such as cooled water (so heat is dissipated there, which is also covered here as a form of heat generation) that can be used directly in a cooling device 14 or be stored in a buffer vessel.

Electricity can also be generated in the engine/generator 7 that only produces electricity, for example if no heat is needed in the building. Combinations of different heat/electricity generators are conceivable dependent of the requirements in a building.

From the forgoing it is clear that the invention provides an installation which makes it possible to obtain a energy-neutral building with relatively low costs. The oxy-hydrogen generator and the combined electricity/heat producing apparatus is equipment with a very high efficiency while these apparatus could be produced in large quantities at low cost, thereby making energy neutral buildings also obtainable for dwelling.

The invention is not limited to the embodiments shown in the drawing and described above, but can be varied in different ways within the scope of the appended claims. For example, it is also possible to treat air with oxy-hydrogen in order to clean the air in the building, so that the oxy-hydrogen is used to feed an air treatment device.

## Claims

1. Installation for generating heat and/or electricity in buildings, comprising
a water supply,
an electricity supply,
an oxy-hydrogen generator connected to the water and electricity supply to produce oxy-hydrogen from the water, in particular by means of electrolysis, and
at least one convertor to convert the energy of the oxy-hydrogen into particular heat and/or electricity for use in the buildings.

2. Installation according to claim 1, wherein the convertor includes a combined electricity/heat production apparatus.

3. Installation according to claim 2, wherein the combined electricity/heat production apparatus has an electricity output that at least partly serves as the electricity supply for the oxy-hydrogen generator.

4. Installation according to one of the preceding claims, wherein the convertor includes at least one of an absorption machine to produce low temperature fluid to cool the building, a heating unit to produce high temperature fluid to heat the building and a motor/generator to produce electricity for use in the building.

5. Installation according to one of the preceding claims, wherein the electricity supply is connected to at least one of solar or wind energy generators.

6. Installation according to one of the preceding claims, wherein the water supply is connected to a rain water collector.
